# EUROPEAN PATENT APPLICATION

(11) **EP 2 778 468 A1**
(43) Date of publication of application: **17.09.2014**
(21) Application number: 12846132.4
(22) Date of filing: 04.10.2012
(51) Int. Cl.: F16H 1/28, F16H 3/44

(54) **CARRIER STRUCTURE FOR PLANETARY GEAR SET**

(30) Priority: 01.11.2011 JP 2011239923; 25.07.2012 JP 2012164700
(71) Applicant: Nissan Motor Company, Limited, Kanagawa-ku Yokohama-shi Kanagawa 221-0023 (JP)
(72) Inventor: SENOO Takashi, Atsugi-shi Kanagawa 243-0123 (JP); TSUKIZAKI Atsushi, Atsugi-shi Kanagawa 243-0123 (JP); KAMINAGA Seiji, Atsugi-shi Kanagawa 243-0123 (JP); SUZUMURA Yasushi, Atsugi-shi Kanagawa 243-0123 (JP)
(74) Representative: Hoefer & Partner
(86) International application number: PCT/JP2012/075803
(87) International publication number: WO 2013/065444

(57) **Abstract**

Among opposing plates (2, 3) constituting a carrier body (1), one plate (2) is directly connected to an external periphery of a shaft part (5) in the vicinity of a shaft end thereof, and the other plate (3) is connected to the shaft part (5) via support columns (4) extending from a shaft end (5a) at an interconnection part between the plate (2) and the vicinity of the shaft end (shaft part (5)). Four support columns (4) forming a set are disposed at equal intervals in the circumferential direction in an external peripheral part of the plate (3), and are integrally connected to the plate (3). The support columns (4) also extend at an angle so as to converge toward the shaft end (5a), and ultimately merge and integrate with a shared annular body (4a). The annular body (4a) is fitted on the shaft end (5a) and connected to the shaft end (5a). Planetary pinions (not illustrated) are supported on pinion shafts (not illustrated) inserted in through-holes (2a, 3a) in the plates (2, 3).

## Description

### [Technological Field]

The present invention relates to a carrier structure for a planetary gear set, and particularly relates to a carrier structure improvement relating to gear noise or vibration, durability, and other characteristics in a planetary gear set.

### [background Technology]

A carrier structure for a planetary gear set is usually configured from a carrier body in which a pair of opposing plates are directly or indirectly connected and integrated on a shared shaft part, and planetary pinions bridged between and supported by the opposing plates so as to be able to rotate about an axis eccentric from the shaft part.
The planetary gear set is also configured so that the planetary pinions of the carrier structure are meshed with a sun gear at the center of the carrier structure and a ring gear in an external peripheral part of the carrier structure.

A planetary gear set in actual use is commonly configured so that a rotation is inputted to the sun gear, the ring gear, or the carrier structure (carrier body) as an input element, and another one of these elements is fixed (or allowed to freely rotate) as a reactive force element, whereby the remaining element is caused to function as an output element, and rotation is produced from the output element.

Direct or indirect connection and integration of the pair of opposing plates on a shared shaft part in a carrier body has conventionally been performed by the process disclosed in document 1, for example.

Specifically, one of the opposing plates is directly connected to the shared shaft part, but the other plate is connected to the one plate by a support column installed as a bridge between the one plate and the other plate. As a result, the other plate is indirectly connected to the shared shaft part via the one plate.

### [Prior Art Citations]

### [Patent Citations]

Patent Citation 1: Japanese Laid-open Patent Publication No. 07-208585

### [Disclosure of the Invention]

### [Problems to Be Solved by the Invention]

However, problems such as those described below are caused when one plate constituting the carrier body is directly connected to a shared shaft part, and the other plate is indirectly connected to the shared shaft part via the one plate by a support column provided in bridging fashion between the opposing plates, as in the conventional carrier structure.

Specifically, during transmission by the planetary gear set, loads in the rotation direction of the carrier body are exerted on each of the opposing plates of the carrier body by driving reaction forces from the planetary pinions.

These input loads on the opposing plates cause each of the plates to displace by an angle amount corresponding to the supporting rigidity thereof in the rotation direction.

In this situation, since the one plate is directly connected to the shaft part, this plate displaces only by an amount corresponding to the relatively large torsional rigidity thereof. However, since the other plate is connected to the shaft part indirectly via the one plate by a support column provided in bridging fashion between the opposing plates, the other plate displaces over a large angle corresponding to the sum of the displacement corresponding to the torsional rigidity of the one plate and the displacement corresponding to the rigidity of the support column.

Specifically, the other plate displaces further than the one plate over an angle that is larger by at least an amount commensurate with the displacement corresponding to the rigidity of the one plate.

Therefore, the opposing plates are displaced relative to each other by at least an amount commensurate with the displacement angle corresponding to the rigidity of the one plate, and the rotational axes of planetary pinions bridged between and rotatably supported by the plates (pinion shafts provided in bridging fashion between the plates so as to removably support the planetary pinions) are inclined in a direction corresponding to the angle of the relative displacement.

This inclination of the rotational axes of the planetary pinions (pinion shafts) causes improper gear meshing between the planetary pinions and the sun gear and ring gear meshed therewith.

There is therefore a risk of problems of significant gear noise or vibration in the planetary gear set and decreased transmission efficiency or durability due to improper tooth contact.

In order to mitigate or overcome these problems, the rigidity of the support column may be increased so that the relative displacement (displacement caused by the rigidity of the one plate) between the opposing plates can be cancelled out.
However, in order to limit the relative displacement of the opposing plates to within an allowable range, the support column must be endowed with even higher rigidity to adequately satisfy strength conditions for supporting the planetary pinions, thus leading to a corresponding increase in weight.

This increase in weight of the support column creates not only a cost disadvantage, but also design difficulties relating to ensuring adequate accommodation space due to increased size, and since the support column is also a rotating body, disadvantages in terms of transmission efficiency (energy consumption) are also unavoidable.

The purpose of the present invention is to provide a carrier structure for a planetary gear set which is improved so as to be able to completely overcome the abovementioned problems, by configuring the arrangement of the support column on the shaft part side so that the displacement of the plate connected to the shaft part via the support column is not affected by the displacement of the counterpart plate, and is determined solely by a displacement corresponding to the rigidity of the support column.

### [Means Used to Solve the Above-Mentioned Problems]

In order to achieve this purpose, the carrier structure for a planetary gear set according to the present invention is configured as described below.
First, the carrier structure for a planetary gear set assumed as the present invention comprises a carrier body in which a pair of opposing plates and a shaft part are integrated, and a planetary pinion bridged between and supported by the opposing plates so as to be able to rotate about an axis eccentric from the shaft part.

The present invention is characterized particularly in that, one of the opposing plates is connected to the shaft part, and the other plate is connected to the shaft part via a support column extending from an interconnection part between the one plate and the shaft part in the planetary gear set provided with the abovementioned carrier structure.

### [Effect of the Invention]

In the carrier structure for a planetary gear set according to the present invention, since one plate of the opposing plates is directly connected to the shaft part, and the other plate is connected to the shaft part via the support column extending from the interconnection part between the one plate and the shaft part, during transmission by the planetary gear set, the other plate connected to the shaft part via the support column is unaffected by displacement of the one plate, and is displaced only by an angle amount corresponding to the rigidity of the support column.

The amount of displacement of the opposing plates relative to each other during transmission by the planetary gear set thereby corresponds to the difference between the amount of displacement of the one plate corresponding to the torsional rigidity thereof and the amount of displacement of the other plate corresponding to the rigidity of the support column.

Consequently, the difference between the amounts of displacement (displacement of the opposing plates relative to each other) is not affected by the displacement of the one plate, and the difference between the amounts of displacement (displacement of the opposing plates relative to each other) can therefore be decreased without increasing the rigidity of the support column.

The rotational axes of the planetary pinions bridged between and rotatably supported by the opposing plates can thereby be restrained from inclining in a direction corresponding to the displacement of the opposing plates relative to each other during transmission by the planetary gear set.

This effect can be achieved almost without relying on increasing the rigidity of the support column, and can be obtained without an increase in weight and cost or a decrease in transmission efficiency (increase in energy loss) that would result from increasing the rigidity of the support column.

Since the inclination of the rotational axes of the planetary pinions is small, as described above, improper meshing between the planetary pinions and the gears that mesh therewith (usually the sun gear and the ring gear, as described above) does not occur in the present invention, and it is possible to overcome the aforementioned problems of significant gear noise or vibration in the planetary gear set and decreased transmission efficiency or durability due to improper tooth contact.

Since these problems can be overcome almost without relying on increasing the rigidity of the support column, the support column need only satisfy the strength requirements for supporting the planetary pinions, and there is no need for any additional increase in rigidity.

An increase in weight or cost due to increasing the rigidity of the support column can thereby be avoided, and design difficulties due to increased size of the support column can be prevented. It is also possible to avoid a decrease in transmission efficiency (increase in energy loss) due to increased weight of the support column, which is a rotating body.

### [Brief Description of the Drawings]

FIG. 1 is a side view illustrating the entire carrier structure for a planetary gear set according to a first embodiment of the present invention;
FIG. 2 is a schematic view of the carrier structure in FIG. 1, where FIG. 2(a) is a schematic side view of the carrier structure and FIG. 2(b) is a schematic longitudinal sectional front view of the carrier structure from the direction of the arrow, the cross-section being along line B-B in FIG. 2(a);
FIG. 3 is a front view of one planetary pinion support plate, and illustrates the carrier structure for a planetary gear set according to a second embodiment of the present invention;
FIG. 4 is a side view of the same type as FIG. 1, illustrating the entire carrier structure for a planetary gear set according to a third embodiment of the present invention;
FIG. 5 is a side view of the same type as FIG. 1, illustrating the entire carrier structure for a planetary gear set according to a fourth embodiment of the present invention; and
FIG. 6 is a schematic side view of the same type as FIG. 2(a), illustrating the carrier structure depicted in FIG. 5 as a line drawing.

### [Key to Symbols]

1: carrier body
2: one plate
2a: planetary pinion bearing through-hole
2b: fan-shaped cut-out portion
3: other plate
3a: planetary pinion bearing through-hole
4: support column
4a: annular body
5: shaft part
5a: shaft end
6: planetary pinion
7: large-diameter pinion part
8: small-diameter pinion part
9: stay

### [Preferred Embodiments of the Invention]

Embodiments of the present invention are described below with reference to the attached drawings.

### Embodiment 1

### <Configuration>

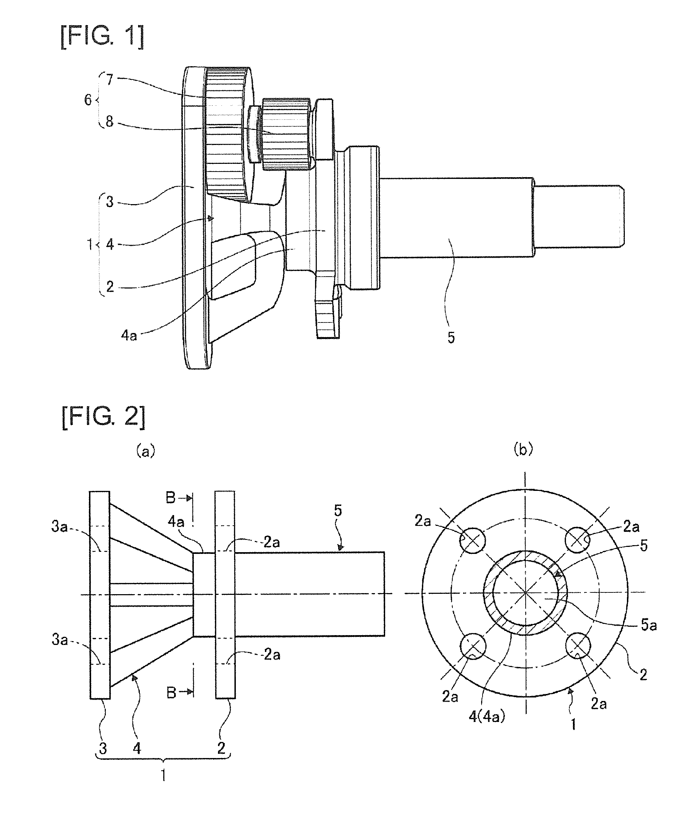

FIGS. 1 and 2 illustrate the carrier structure for a planetary gear set according to a first embodiment of the present invention. FIG. 1 is a side view illustrating the entire carrier structure, and FIG. 2 is a view illustrating the carrier structure schematically for description.

In FIGS. 1 and 2, the reference numeral 1 refers to the carrier body, and this carrier body 1 is configured from a pair of plates 2, 3 coaxially disposed facing each other, and support columns 4 for supporting the other plate 3 of these plates of which one plate 2 and the other plate 3 face each other.

Of the opposing plates 2, 3, the one plate 2 is directly connected to a shaft part 5 shared by both the opposing plates 2, 3 in the vicinity of a shaft end thereof, i.e., to an external peripheral part of the shaft part 5 in the vicinity of a shaft end thereof as illustrated on the left sides of FIGS. 1 and 2(a).

However, the other plate 3 is connected to the shaft part 5 via the support columns 4 extending from the shaft end indicated by the reference numeral "5a" in FIG. 2(b), at an interconnection part between the one plate 2 and the vicinity of the shaft end of the shaft part 5.

A plurality (four in FIGS. 1 and 2) of the support columns 4 forming a set are disposed at equal intervals in the circumferential direction in an external peripheral part of the plate 3, and are integrally molded or integrally connected to the plate 3.

The support columns 4 also extend at an angle as illustrated in FIG. 2(a) so as to converge toward a shaft end 5a of the shaft part 5, free ends of the support columns 4 away from the plate 3 ultimately merging and integrating with a shared annular body 4a.

Fitting the annular body 4a onto the shaft end 5a described above enables the plate 3 to be connected to the shaft part 5 via the support columns 4 extending from the shaft end 5a.

The carrier body 1 is thereby configured so that the coaxial opposing plates 2, 3 are each individually connected to and integrated with the shared shaft part 5 without the intervention of the respective other plate 3, 4.

In the carrier body 1 such as described above, a carrier structure is formed in which planetary pinions 6 are rotatably supported between the opposing plates 2, 3 so as to be able to rotate about an axis eccentric from the shaft part 5, as illustrated in FIG. 1. Here, the planetary pinion 6 are stepped pinions, each having a large-diameter pinion part 7 and a small-diameter pinion part 8 integrated with each other.

Only one planetary pinion 6 is illustrated in FIG. 1, but actually, a plurality (four in the case of FIG. 1) of planetary pinions 6 as a set are disposed at equal intervals in the circumferential direction of the plates 2, 3, and the planetary pinions 6, extending in an axial direction between peripheral edge parts of the opposing plates 2, 3, are rotatably supported between the peripheral edge parts of the opposing plates 2, 3.

A number of through-holes 2a, 3a equal to the number of planetary pinions 6 are therefore formed in each of the opposing plates 2, 3, and through-holes 2a and 3a forming pairs are aligned with each other in the axial direction and disposed between adjacent support columns 4 in the circumferential direction of the plates 2, 3.

Pinion shafts not illustrated in the drawings are provided which are inserted in each pair of through-holes 2a, 3a aligned with each other in the axial direction, each of the abovementioned planetary pinions 6 is rotatably supported on a pinion shaft, and the planetary pinions 6 are removably supported with respect to the carrier body 1 (opposing plates 2, 3).

When the carrier structure formed by the carrier body 1 and the planetary pinions 6 described above is used in a planetary gear set, the large-diameter pinion parts 7 of the planetary pinions 6 are meshed with a sun gear (not illustrated) at the center of the carrier structure, and the small-diameter pinion parts 8 are meshed with internal peripheral teeth of a ring gear (not illustrated) in an external peripheral part of the carrier structure, for example, thereby constituting a planetary gear set.

During actual use of this planetary gear set, a rotation is inputted to the sun gear, the ring gear, or the carrier structure (carrier body 1) as an input element, and another one of these elements is fixed (or allowed to freely rotate) as a reactive force element, whereby the remaining element is caused to function as an output element, and rotation is produced from the output element.

### <Effects>

In the carrier structure for a planetary gear set according to the present embodiment, since one plate 2 of the opposing plates 2, 3 is directly connected to the shaft part 5, and the other plate 3 is connected to the shaft part 5 via support columns 4 extending from a location on the shaft part 5 at the interconnection part between the one plate 2 and the shaft part 5, during transmission by the planetary gear set, the other plate 3 connected to the shaft part 5 via the support columns 4 is unaffected by displacement of the one plate 2, and is displaced only by an angle amount corresponding to the rigidity of the support columns 4.

The amount of displacement of the opposing plates 2, 3 relative to each other during transmission by the planetary gear set thereby becomes the difference between the amount of displacement of the one plate 2 corresponding to the torsional rigidity thereof and the amount of displacement of the other plate 3 corresponding to the rigidity of the support columns 4.

Consequently, the difference between the amounts of displacement (displacement of the opposing plates 2, 3 relative to each other) is not affected by the displacement of the one plate 2, and the difference between the amounts of displacement (displacement of the opposing plates 2, 3 relative to each other) can therefore be decreased without increasing the rigidity of the support columns 4.

The rotational axes of the planetary pinions 6 bridged between and rotatably supported by the opposing plates 2, 3 are thereby restrained from inclining in a direction corresponding to the displacement of the opposing plates 2, 3 relative to each other during transmission by the planetary gear set.

This effect can be achieved almost without relying on increasing the rigidity of the support columns 4, and can be obtained without an increase in weight and cost or a decrease in transmission efficiency (increase in energy loss) that would result from increasing the rigidity of the support columns 4.

Since the inclination of the planetary pinions 6 due to displacement of the opposing plates 2, 3 relative to each other is small, as described above, improper meshing between the planetary pinions 6 and the gears that mesh therewith (usually the sun gear and the ring gear, as described above) does not occur in the present embodiment, and it is possible to overcome the aforementioned problems of significant gear noise or vibration in the planetary gear set and decreased transmission efficiency or durability due to improper tooth contact.

Since these problems can be overcome almost without relying on increasing the rigidity of the support columns 4, the support columns 4 need only satisfy the strength requirements for supporting the planetary pinions 6, and there is no need for any additional increase in rigidity.

An increase in weight or cost due to increasing the rigidity of the support columns 4 can thereby be avoided, and design difficulties due to increased size of the support columns 4 can be prevented. It is also possible to avoid a decrease in transmission efficiency (increase in energy loss) due to increased weight of the support columns 4, which form a rotating body.

Furthermore, since the end parts of the support columns 4 on the shaft part 5 side converge at an interconnection part between the one plate 2 and the shaft part 5 in the present embodiment, the end parts of the support columns can be processed in a small diameter range, and the time and cost required to manufacture the carrier body (carrier structure) can be reduced.

Since the one plate 2 is directly connected to the shaft part 5 in the vicinity of the shaft end 5a, and the other plate 3 is connected to the shaft part 5 via the support columns 4 extending from the shaft end 5a at the interconnection part between the one plate 2 and the vicinity of the shaft end 5a in the present embodiment, it is possible to obtain a structure in which the shaft part 5 almost does not extend into the carrier body 1, as illustrated in FIG. 2(a), the same as in the conventional structure.

The installation space for the gears housed in the carrier body 1 can therefore easily be kept unchanged from the conventional configuration. Consequently, the various operations/effects described above can be achieved without adversely affecting the workability of assembly and the ease of design of the carrier structure.

Furthermore, since the support columns 4 are provided integrally with the other plate 3, and the free ends away from the other plate 3 are connected at the location of the shaft part 5 at the interconnection part between the one plate 2 and the shaft part 5 in the present embodiment, and also since the free ends of the support columns 4 are merged and integrated with the annular body 4a, the abovementioned effects are obtained without increasing the number of assembled components in the carrier body 1 (carrier structure), which is significantly advantageous in terms of cost and productivity.

Moreover, since the end parts of the support columns 4 near the other plate 3 are connected to or integrated with the other plate 3 at the external peripheral part of the other plate 3, the rigidity of the connection of the support columns 4 to the other plate 3 is increased, and the abovementioned operations/effects can be made even more significant.

### Embodiment 2

### <Configuration>

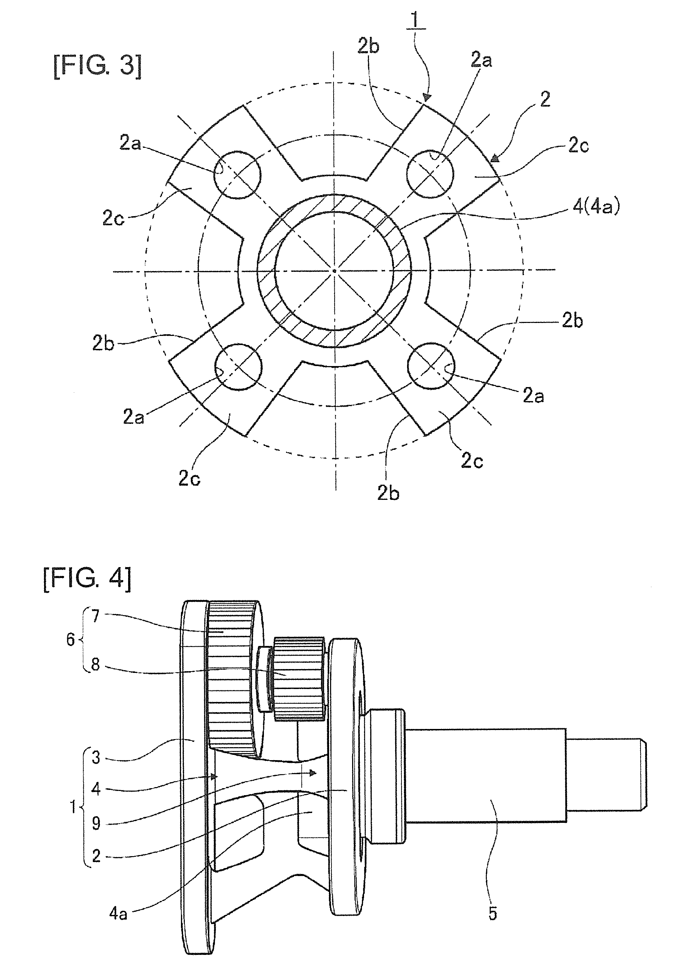

FIG. 3 illustrates the carrier structure according to a second embodiment of the present invention.

The configuration of the present embodiment is basically the same as that of the first embodiment described using FIGS. 1 and 2, except that the plate 2 directly connected to the shaft part 5 is configured so that circumferential regions 2b between bearing through-holes 2a of the planetary pinions 6 are cut out to form a fan shape.

The cut-out portions 2b are not limited to the size and fan shape described above, and any size and shape may be selected insofar as the planetary pinions 6 can be removably supported.

### <Effects>

The cut-out portions 2b thus configured reduce the torsional rigidity of the plate 2, i.e., the rigidity in the circumferential direction of the plate portions 2c in which the planetary pinion bearing through-holes 2a are formed, and the effects described below are thereby obtained.

As mentioned in the description of the first embodiment, the relative displacement of the opposing plates 2, 3 (inclination of the planetary pinions 6) during transmission by the planetary gear set is determined by the difference between the amount of displacement of the plate 2 corresponding to the torsional rigidity thereof and the amount of displacement of the plate 3 corresponding to the rigidity of the support columns 4.

However, the torsional rigidity of the plate 2 is usually higher than the rigidity of the support columns 4, and without a special design, it is difficult to reduce the relative displacement between the opposing plates 2, 3 (inclination of the planetary pinions 6) corresponding to the difference in the abovementioned rigidities to zero or a minute value close to zero even when the relative displacement can be kept within an allowable range.

In the present embodiment, however, since the torsional rigidity of the plate 2 is reduced by the setting of the cut-out portions 2b, the torsional rigidity of the plate 2 can be made the same as or close to the rigidity of the support columns 4.

The difference between the amount of displacement of the plate 2 corresponding to the torsional rigidity thereof and the amount of displacement of the plate 3 corresponding to the rigidity of the support columns 4 can thereby be made as close to zero as possible, and the relative displacement of the opposing plates 2, 3 (inclination of the planetary pinions 6) can be almost eliminated.
Therefore, in the present embodiment, it is possible to more reliably obtain the effect of the first embodiment whereby improper meshing of gears does not occur, and it is possible to almost completely avoid the aforementioned problems of significant gear noise or vibration in the planetary gear set and decreased transmission efficiency or durability due to improper tooth contact.

### Embodiment 3

### <Configuration>

FIG. 4 illustrates the carrier structure according to a third embodiment of the present invention.

The configuration of the present embodiment is basically the same as that of the first embodiment described using FIGS. 1 and 2, except that the plate 2 directly connected to the shaft part 5 is connected to locations on the shaft part 5 at the interconnection part between the one plate 2 and the shaft part 5 also by stays 9 extending between the external peripheral part of the plate 2 and the shared annular body 4a in which the free ends of the support columns 4 away from the plate 3 merge.

The number of stays 9 is equal to the number of support columns 4, and the stays 9 are disposed in the same positions as the support columns 4 in the circumferential direction. Free ends of the stays 9 away from the plate 2 extend toward the free ends of the support columns 4 in the same positions in the circumferential direction and abut the free ends of the corresponding support columns 4, and connect to the shared annular body 4a at the free ends of the support columns 4. The free ends of the stays 9 are each thereby connected to a location on the shaft part 5 at the interconnection part between the plate 2 and the shaft part 5. The end parts of the stays 9 close to the plate 2 are also each connected to or integrated with the external peripheral part of the plate 2.

### <Effects>

In the carrier structure of the present embodiment illustrated in FIG. 4, since the plate 5 directly connected to the shaft part 5 is connected to the shaft part 5 also via the stays 9 extending from the interconnection part (annular body 4a) between the plate 2 and the shaft part 5, the torsional rigidity of the opposing plates 2, 3 during transmission by the planetary gear set can be brought even closer to that of the first embodiment, and displacement of the opposing plates 2, 3 relative to each other can be even further reduced.

It is thereby possible to more effectively suppress inclination of the rotational axis of the planetary pinions 6 bridged between and rotatably supported by the opposing plates 2, 3, and the operations/effects described in the first embodiment are made more significant.

In the present embodiment, since the end parts of the stays 9 on the plate 2 side are connected to or integrated with the external peripheral part of the plate 2, and the free ends of the stays 9 extend toward and abut the free ends of the support columns 4, and connect to the shared annular body 4a at the free ends of the support columns 4, the arrangement of the stays 9 is the same as the arrangement of the support columns 4, the rigidity of the stays 9 with respect to torsional reaction forces received during transmission by the planetary gear set is the same as that of the support columns 4, and the abovementioned operations/effects can be made even more significant.

### Embodiment 4

### <Configuration>

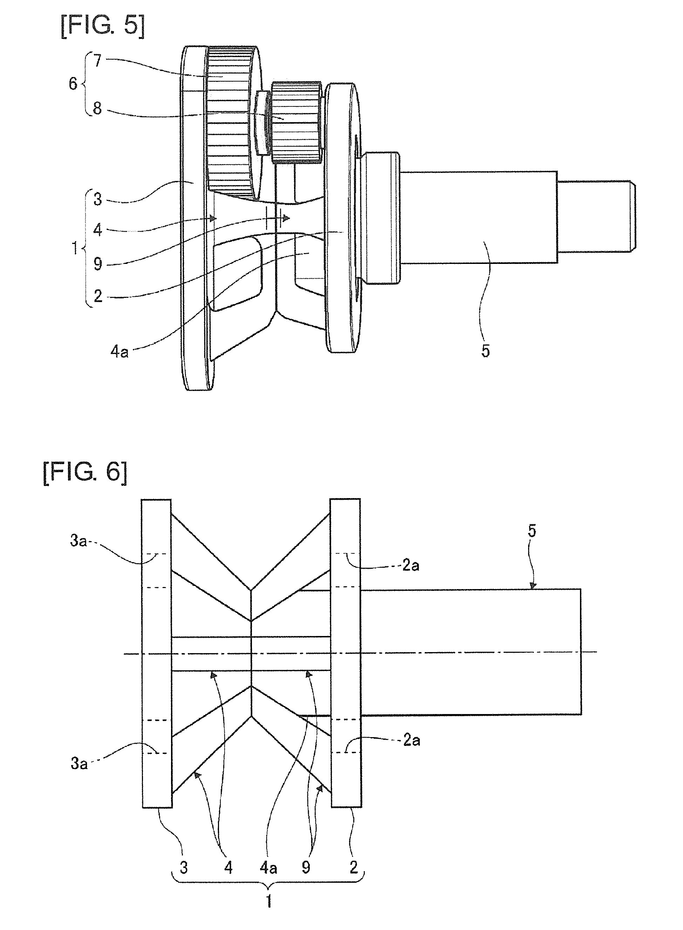

FIGS. 5 and 6 illustrate the carrier structure according to a fourth embodiment of the present invention.

The configuration of the present embodiment is basically the same as that of the third embodiment described using FIG. 4, except that the free ends of the stays 9 and the free ends of the support columns 4 are connected at a middle position between the plates 2, 3, and the stays 9 and the support columns 4 are thereby configured so as to have substantially the same length.

### <Effects>

In the carrier structure of the present embodiment, since the lengths of the stays 9 and the lengths of the support columns 4 are substantially the same, the rigidity of the stays 9 with respect to torsional reaction forces received during transmission by the planetary gear set is the same as that of the support columns 4.
Inclination of the rotational axis of the planetary pinions 6 bridged between and rotatably supported by the opposing plates 2, 3 can thereby be suppressed more effectively than in the third embodiment, and the aforementioned operations/effects can be made more significant. Other Embodiments

In the first embodiment described above, the other plate 3 is connected to the shaft part 5 by support columns 4 extending from locations on the shaft part 5 at the interconnection part between the one plate 2 and the shaft part 5, but a configuration may, of course, be adopted in which the other plate 3 is connected to the shaft part 5 by support columns 4 extending from locations on the plate 2 at the interconnection part between the one plate 2 and the shaft part 5, and it is obvious that the same effects can be achieved in this case as well.

## Claims

1. A planetary gear set provided with a carrier structure comprising a carrier body in which a pair of opposing plates and a shaft part are integrated, and a planetary pinion bridged between and supported by said opposing plates so as to be able to rotate about an axis eccentric from said shaft part, said carrier structure for a planetary gear set **characterized in that**
one of said opposing plates is connected to said shaft part, and the other plate is connected to said shaft part via a support column extending from an interconnection part between said one plate and the shaft part.

2. The carrier structure for a planetary gear set according to claim 1, wherein
said support column extends between said other plate and a location on said shaft part at said interconnection part.

3. The carrier structure for a planetary gear set according to claim 2, wherein
said one plate is connected adjacent one shaft end of said shaft part; and
said support column extends between said other plate and said shaft end at the interconnection part between said one plate and adjacent to said shaft end.

4. The carrier structure for a planetary gear set according to any of claims 1-3, wherein
a plurality of said planetary pinions being arranged in a circumferential direction as a set, said carrier structure for a planetary gear set **characterized in that**
circumferential regions of said one plate between pinion support parts for rotatably supporting said planetary pinions are cut out.

5. The carrier structure for a planetary gear set according to any of claims 1-4, wherein
said support column is provided integrally with said other plate, and free ends thereof away from the other plate are connected to the interconnection part between said one plate and the shaft part.

6. The carrier structure for a planetary gear set according to any of claims 1-5, wherein
an end part of said support column adjacent said other plate is connected to or integrated with said other plate at an external peripheral part of the other plate.

7. The carrier structure for a planetary gear set according to any of claims 1-6, wherein
said one plate is connected to said shaft part also via a stay extending from said interconnection part.

8. The carrier structure for a planetary gear set according to claim 7, wherein
said stay extending from said interconnection part is connected to said shaft part at an external peripheral part of said one plate.

9. The carrier structure for a planetary gear set according to claim 7 or 8, wherein
said stay extends in a direction approaching said support column from said one plate and is connected to an end part of the support column away from said other plate.

10. The carrier structure for a planetary gear set according to any of claims 7-9, wherein
said stay and support column are configured so as to have substantially the same length.
